# EUROPEAN PATENT APPLICATION

(11) **EP 3 024 236 A1**
(43) Date of publication of application: **25.05.2016**
(21) Application number: 14306840.1
(22) Date of filing: 20.11.2014
(51) Int. Cl.: H04N 19/30, H04N 19/33

(54) **Method and device for transmission of a video**

(71) Applicant: ALCATEL LUCENT, 92100 Boulogne-Billancourt (FR)
(72) Inventor: Aerts, Maarten, 2018 Antwerpen (BE); Rondao Alface, Patrice, 2018 Antwerpen (BE); Macq, Jean-François, 2018 Antwerpen (BE)
(74) Representative: ALU Antw Patent Attorneys

(57) **Abstract**

Embodiments relate to a method for transmission of a video (V) from a source device (2) to a destination device (3), executed by the source device (2), comprising encoding a current portion (Pc) of the video (V) by:
- receiving (S2), from the destination device (3), prediction data (PredD),
- determining (S3) a reconstruction (RecPc) of the current portion (Pc) in function of the received prediction data,
- determining (54) residual data (Res) in function of the current portion and said reconstruction, and
- sending (S5), to the destination device (3), said residual data (Res).

## Description

### FIELD OF THE INVENTION

The present invention relates to the field of telecommunications. In particular, the present invention relates to methods and devices for encoding, decoding and transmission of a video.

### BACKGROUND

MPEG-family encoders predict a new frame from the old by block matching. The encoder determines motion vectors which pair the macroblocks of the new frame with the best matching macroblock (in its local neighborhood) of the previous frame. Block matching requires a search matching a macroblock against many equally sized macroblocks, a computationally expensive task. Furthermore, transmission of the motion vectors from the encoder to the decoder requires bandwidth.

A solution exists that eliminates having to send the motion vectors from the encoder to the decoder. The idea is to do the same block matching technique at the decoder side. Since the decoder cannot rely on the new frame to match against, the template matching method proposes not to match the macroblock itself, but rather a neighboring window of already matched and decoded pixels in the video stream.

### SUMMARY

It is thus an object of embodiments of the present invention to propose methods and devices for encoding, decoding and transmission of a video, which do not show the inherent shortcomings of the prior art.

Accordingly, embodiments relate to a method for transmission of a video from a source device to a destination device, executed by the source device, comprising encoding a current portion of the video by:
- receiving, from the destination device, prediction data,
- determining a reconstruction of the current portion in function of the received prediction data,
- determining residual data in function of the current portion and said reconstruction, and
- sending, to the destination device, said residual data.

Correspondingly, embodiments relate to source device for transmission of a video from the source device to a destination device, by encoding a current portion of the video, comprising:
- means for receiving, from the destination device, prediction data,
- a reconstruction module for determining a reconstruction of the current portion in function of the received prediction data,
- a comparison module for determining residual data in function of the current portion and said reconstruction, and
- means for sending, to the destination device, said residual data.

In some embodiments, the current portion is a macroblock of a current frame encoded in function of a previous frame or a working state of the previous frame, and the prediction data comprise a motion vector (MV) specifying a macroblock of the previous frame associated with said macroblock of the current frame.

In some embodiments, the current portion is a group of macroblocks of a current frame encoded in function of a previous frame or a working state of the previous frame, and the prediction data comprise motion vectors specifying respective macroblocks of the previous frame associated with said macroblocks of the current frame.

In some embodiments, the current portion is a current frame and said reconstruction is a reconstruction of the current frame at a first resolution, the method comprising:
- receiving, from the destination device, additional prediction data,
- determining another reconstruction of the current frame at a second resolution higher than the first resolution, in function of the received additional prediction data,
- determining additional residual data in function of the current frame and said another reconstruction, and
- sending, to the destination device, said additional residual data.

In some embodiments, the current portion is a group of frames, and the prediction data comprises motion vectors for one frame of said group of frame determined in function of other frames of said group of frames.

The prediction data may comprise a flow map or an intra-coded prediction of the current frame.

Other embodiments relate to a method for transmission of a video from a source device to a destination device, executed by the destination device, comprising decoding a current portion of the video by:
- determining prediction data in function of a working state associated with the current portion,
- sending the prediction data to the source device, and then
- receiving, from the source device, residual data,
- determining an updated working state associated with the current portion in function of the received residual data.

Correspondingly, embodiments relate to a destination device for transmission of a video from a source device to the destination device, by decoding a current portion of the video, comprising:
- a prediction module for determining prediction data in function of a working state associated with the current portion,
- means for sending the prediction data to the source device, and then receiving, from the source device, residual data,
- an update module for determining an updated working state associated with the current portion in function of the received residual data.

In some embodiments, the current portion is macroblock of a current frame and the working state associated with the current portion comprises decoded macroblocks and not yet decoded macroblocks of the current frame, and determining prediction data comprises determining one motion vector specifying a macroblock of a previous frame associated with the macroblock of the current frame, by matching a template of decoded macroblocks of the working state located next to the not yet decoded macroblock with the previous frame or a corresponding working state of the previous frame.

In some embodiments, the current portion is a group of macroblocks of a current frame and the working state associated with the current portion comprises decoded macroblocks and not yet decoded macroblocks of the current frame, and determining prediction data comprises determining motion vectors specifying respective macroblocks of a previous frame associated with the macroblocks of the current frame, by matching templates of decoded macroblocks of the working state located next to the not yet decoded macroblocks with the previous frame or a corresponding working state of the previous frame.

In some embodiments, the current portion is a current frame and the working state of the current frame comprises a decoded version of the current frame in a first resolution and a not yet decoded version of the current frame in a second resolution higher than the first resolution,
determining prediction data comprising determining motion vectors in function of the version of the current frame in the first resolution and a version of the previous frame in the first resolution.

In some embodiments, the current portion is a current frame and the working state of the current frame comprises a decoded version of the current frame in a first resolution and a not yet decoded version of the current frame in a second resolution higher than the first resolution,
wherein determining prediction data comprises:
- determining a prediction version of the current frame in the second resolution in function of the version of the current frame in the first resolution, and
- determining a motion vectors in function of prediction version of the current frame in the second resolution and a version of the previous frame in the second resolution.

In some embodiments, the current portion is a group of frames, and the method comprises determining motion vectors for one frame of the group of frame, wherein the prediction data comprises the motion vectors for said one frame or motion vectors for another frame of the group of frames determined in function of the motion vectors for said one frame.

In some embodiments, determining prediction data comprises:
- determining a predicted state of at least one object included in the current portion in function of a state model and a previous state,
- determining a prediction of the current portion or a flow map in function of the predicted state and an appearance model of the object.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for transmission of a video,
Figure 2 is a flowchart of methods for transmission of a video in the system of Figure 1,
Figures 3 to 7 show working states used in the system of Figure 1, according to various embodiments, and
Figure 8 is a structural view of a communication device of the system of Figure 1.

### DESCRIPTION OF EMBODIMENTS

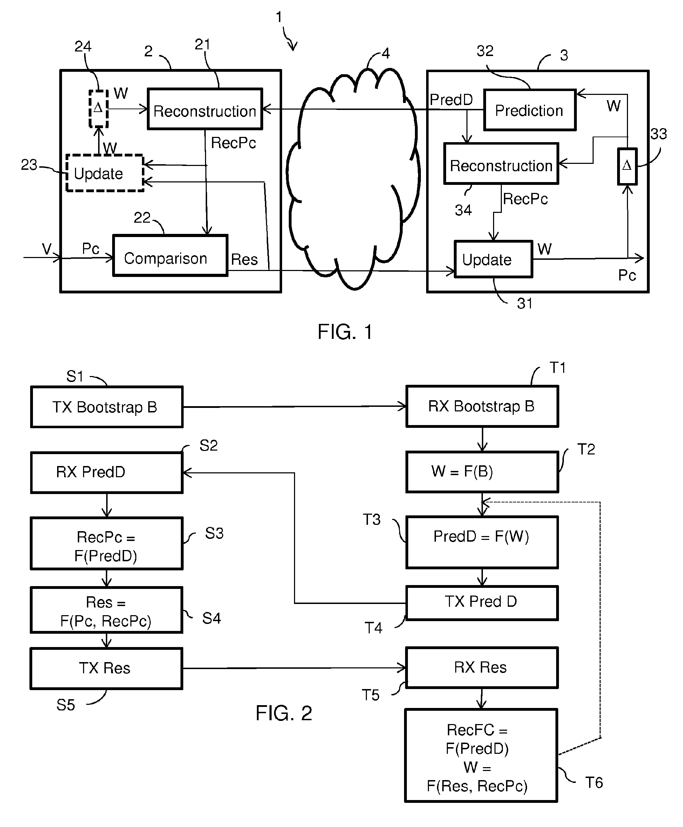

**Figure 1** shows a system 1 for transmission of a video. The system 1 comprises a source device 2 and a destination device 3 connected by a network 4.

The source device 2 encodes an input video V and transmits the encoded video to the destination device 3. The input video V is for example a video captured by a camera included or connected to the source device 2. The source device 2 encodes the input video V by encoding successive portions of the input video V. A portion may be for example a frame, an area of a frame such as a macroblock, a group of frames, an object present in successive frames of the video...

The destination device 3 receives the encoded portions of the video from the source device 2, and decodes the received portions. The destination device 3 may be a final destination where the decoded video is displayed, or an intermediary node between the source device 2 and another device (not shown). The destination device 3 may store the decoded video, encoded it in another format, transmit it to another device...

The network 4 allows bidirectional communication between the source device 2 and the destination device 3. As will be described in more details hereafter, the source device 2 uses data received from the destination device 3 for encoding the input video V.

The source device 2 comprises a reconstruction module 21 and a comparison module 22. In some embodiments, the source device 2 also comprises an update module 23 and a delay module 24. The destination device 3 comprises an update module 31, a prediction module 32, a reconstruction module 34 and a delay module 33.

The functioning of the source device 2 and the destination device 3 is shown on **Figure 2****,** which is a flowchart of methods executed respectively by the source device 2 and the destination device 3 for transmission of the input video V. More specifically, the steps S1 to S5 relate to the method for transmission of a video executed by the source device 2, and steps T1 to T6 relate to the method for transmission of a video executed by the destination device 3. The flowchart of Figure 2 illustrate the encoding, transmission and decoding of a current portion Pc. Successive current portions Pc of the video V may be encoded, transmitted and decoded in a similar manner.

Initially, the source device 2 sends a bootstrap B to the destination device 3 (steps S1 and T1). The bootstrap B includes intra-coded data of the current portion Pc of the input video V. Examples of bootstrap B will be described in more details hereafter.

The destination device 3 initializes a working state W associated with the current portion Pc in function of the bootstrap B (step T2).

Then, the prediction module 32 of the destination device 3 determines prediction data PredD in function of the working state W (step T3). The prediction data PredD comprises data useful for determining a reconstruction of the current portion Pc. In the examples described in details hereafter, the prediction data PredD includes one or more motion vector(s), an intra-coded frame or a flow map. The determined prediction data PredD is sent to the source device 2 (step T4).

In response to receiving the prediction data PredD from the destination device 3 (step S2), the reconstruction module 21 of the source device 2 determines a reconstruction RecPc of the current portion Pc in function of the prediction data PredD (step S3).

Then, the comparison module 22 of the source device 2 determines residual data Res in function of the current portion Pc and the reconstruction RecPc (step S4). The residual data Res is representative of a difference, or prediction error, between the current portion Pc and the reconstruction RecPc. The determined residual data Res is sent to the destination device (Step S5).

In response to receiving the residual data Res from the source device 2 (step T5), the update module 31 of the destination device 3 updates the working state W associated with the current portion Pc (step T6), in function of the received residual data Res and a reconstruction RecPc of the current portion. The reconstruction RecPc has been determined by the reconstruction module 34 in function of the prediction data PredD determined at step T3.

Accordingly, steps T3, T4, S2-S5, T5 and T6 allow updating the working state W of the current portion Pc.

In some embodiments, the updated working state W comprises the decoded current portion Pc after one execution of steps T3, T4, S2-S5, T5 and T6. In other embodiments, these steps are repeated in loop for refining the working state W, for example until the working state W has been updated to comprise the decoded current portion Pc or until bandwidth is spent. These two options are shown by the dashed arrow of Figure 2.

It should be noted that the source device 2 does not need to determine prediction data PredD. Accordingly, computational complexity and power consumption at the source device 2 is limited. Also, the source device 2 does not need to send prediction data PredD to the destination device 3. Accordingly, outgoing bandwidth consumption at the source device 2 is limited. This is particularly useful in case the source device 2 is a mobile device with limited computational power and/or limited battery power and/or limited available outgoing bandwidth.

The current portion Pc may be encoded with or without reference to one or more other portion(s) Pp, for example a previous portion.

In an embodiment wherein the current portion Pc is encoded with reference to another portion Pp, the source device 2 may send an intra-coded first portion P1 to the destination device 3, thereby allowing the destination device 3 to decode the second portion P2 by reference to the received first portion P1. Then, the destination device 3 may decode the successive current portions Pc by reference to a previously decoded portion.

More specifically, at step T3, the prediction module 32 may determine the prediction data PredD in function of the working state W associated with the current portion Pc and of the other portion Pp or a corresponding working state W of the other portion Pp. Also, at step T6, the reconstruction module 34 may determine the reconstruction RecPc of the current portion Pc in function of the prediction data PredD and of the other portion Pp or a corresponding working state W of the other portion Pp. Similarly, at step S3, the reconstruction module 21 may determine the reconstruction RecPc of the current portion Pc in function of the prediction data PredD and of the other portion Pp or of a corresponding working state W of the other portion Pp. At the source device 2, the working state W of the other portion Pp may be determined by the update module 23 which reproduces the processing of the update module 31.

Hereafter, various embodiments are described and give more detailed examples of the types of bootstrap B, the type of prediction module 31, prediction data, and reconstruction modules 21 and 34.

As can be seen from the description of Figure 2, the encoding of the input video V by the source device 2 relies on an interaction with the destination device 3. Accordingly, the system 1 is adapted for streaming transmission of the input video V from the source device 2 to the destination device 3. However, this does not mean that streaming is the only application of the system 1. Indeed, as explained previously, the destination device 3 may store and/or convert the video in another format, and send it later to another device.

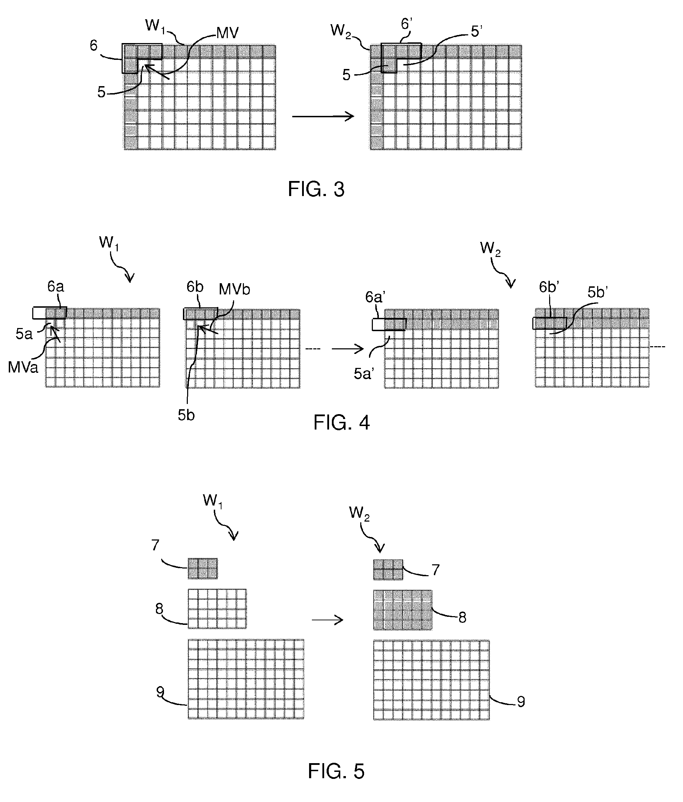

In a first embodiment, the current portion Pc is a macroblock of a current frame Fc, encoded with reference to a previous frame Fp. The frames are divided in macroblocks arranged in lines and columns. A macroblock is a rectangular area of a frame comprising a plurality of pixels. Successive working states W associated with respective macroblocks comprise version of the current frame Fc with additional decoded macroblocks. The prediction module 32 determines a motion vector by template matching and sends it to the source device 2. The reconstruction module 21 determines a reconstruction of the current portion Pc, namely one macroblock of the current frame Fc. **Figure 3** shows successive working states W of the current frame Fc, within the destination device 3, for this first embodiment.

We assume that the destination device 3 knows the previous frame Fp. For example, the previous frame Fp is the first frame which has been intra-coded by the source device 2, or a previously decoded current frame.

Initially, the destination device 3 receives a bootstrap B (step T1) which includes intra-coded data for the first line and the first column of macroblocks of the current frame Fc.

Then, the destination device 3 initializes a working state W₁ in function of the bootstrap B. The working state W₁ includes the decoded first line and first column of macroblocks. This is shown by grey macroblocks on Figure 3. The rest of the current frame Fc is not yet decoded in the working state W₁, and this is shown by empty macroblocks on Figure 3. The working state W₁ is associated with a non-decoded macroblock 5 having neighboring decoded macroblocks.

Then, the prediction module 32 of the destination device 3 determines a motion vector MV associated with the macroblock 5 which is not yet decoded and located next to decoded macroblocks, namely the 2^{nd} macroblock of the second line in this case. For this, the destination device 3 matches a sideway L-shape template 6 of decoded macroblocks located next to the macroblock 5, with the previous frame Fp. In this embodiment, the motion vector MV corresponds to the prediction data PredD of step T3 of Figure 2. The destination device 3 sends the motion vector MV to the source device 2.

Accordingly, the source device 2 receives the motion vector MV, which specifies a macroblock of the previous frame Fp associated with the macroblock 5 of the current frame Fc. Then, the reconstruction module 21 of the source device 2 determines a reconstruction RecFc of the macroblock 5 of the current frame Fc in function of the previous frame Fp and the motion vector MV (step S3), namely by moving the macroblock of the previous frame Fp specified by the motion vector MV to the location of the macroblock 5. Then, the comparison module 22 of the source device 2 determines residual data Res associated with the macroblock 5, by comparing the current frame Fc with its reconstruction RecFc (step S4). Note that in practice, the residual data Res may be determined by comparing the macroblock 5 of the current frame Fc with the associated macroblock of the previous frame Fp specified by the motion vector MV.

Then, the source device 2 sends the determined residual data Res to the destination device 3 (step S5).

When it receives the residual data Res (step T5), the update module 31 of the destination device 3 decodes the macroblock 5 in function of the received residual data Res and a reconstruction RecFc of the current frame Fc. The reconstruction RecFc had been determined by the reconstruction module 34 in function of the motion vector MV and the previous frame Fp. Accordingly, the update module 31 updates the working state W (step T6) of the current frame Fc to a working state W₂ including the decoded macroblock 5, now shown in grey on Figure 3. The working state W₂ is associated with a non-decoded macroblock 5' having neighboring decoded macroblocks.

This process is repeated starting from working state W₂ for decoding the next not yet decoded macroblock 5', using the corresponding template 6', and so on for successive macroblocks of the same line, then for successive lines of the frame, until all the macroblocks of the current frame Fc have been decoded. Accordingly, the current frame Fc has been transmitted from the source device 2 to the destination device 3, without the need for the source device 2 to determine motion vectors nor to transmit motion vectors.

This process may be repeated for the next current frame.

The embodiment described with reference to Figure 3 uses a sideway L-shape template 6, a left-to right and top-to-bottom scanning order of the macroblocks and a bootstrap B including the first line and first column of macroblocks of the current frame Fc. Of course, other template shapes, scanning orders and bootstrap may be use as alternative. For example, in another embodiment, the current portion Pc is a line of macroblocks of a current frame Fc. This embodiment use a bootstrap B comprising intra-coded data for the first line of macroblocks of the current frame Fc, and an I-shape template. The prediction module 32 determines motion vectors for one line of macroblocks by template matching and sends them to the source device 2. The reconstruction module 21 determines a reconstruction of the current portion, namely one line of macroblocks. **Figure 4** shows successive working states W, within the destination device 3, for this embodiment.

Initially, the destination device 3 receives the bootstrap B (step T1) which includes intra-coded data for the first line of macroblocks of the current frame Fc.

Then, the destination device 3 initialize the working state W₁ of the current frame Fc in function of the bootstrap B (T2). The working state W₁ includes the decoded first line of macroblocks. This is shown by grey macroblocks on Figure 4. The rest of the current frame Fc is not yet decoded in the working state W₁, and this is shown by empty macroblocks on Figure 4. The working state W₁ is associated with the second line of macroblocks 5a, 5b... of the current frame Fc.

Then, the destination device 3 determine motion vector MVa, MVb... associated with the respective macroblocks 5a, 5b... of the second line of macroblocks. For this, the destination device 3 matches respective sideway I-shape templates 6a, 6b... located above the macroblocks 5a, 5b... which includes decoded macroblocks of the current frame Fc, with the previous frame Fp. In this embodiment, the motion vectors MVa, MVb... correspond to the prediction data PredD of step T3 of Figure 2. The destination device 3 sends the motion vectors MVa, MVb... to the source device 2 (Step T4).

Accordingly, the source device 2 receives the motion vectors MVa, MVb... which specifies respective macroblocks of the previous frame Fp associated with the macroblocks 5a, 5b... of the current frame Fc (Step S2). Then, the source device 2 determines a reconstruction RecFc of the current portion Pc (namely a line of macroblocks), in function of the previous frame Fp and the motion vectors MVa, MVb... (Step S3). Then, the source device 2 determines residual data Res associated with the current portion Pc (macroblocks 5a, 5b...) by comparing the current frame Fc with the reconstruction RecFc (step S4). Note that in practice, the residual data Res may be determined by comparing the macroblocks 5a, 5b... of the current frame Fc with the associated macroblocks of the previous frame Fp specified by the motion vectors MVa, MVb,...

Then, the source device 2 sends the determined residual data Res to the destination device 3 (step S5).

When it receives the residual data Res (step T5), the destination device 3 decodes the macroblocks 5a, 5b... in function of the received residual data Res, the motion vectors MVa, MVb... and the previous frame Fp, and updates the working state W (step T6) of the current frame Fc to a working state W₂ including the decoded macroblocks 5a, 5b... now shown in grey on Figure 4. The working state W2 is associated with the third line of macroblocks 5a', 5b'...

This process is repeated starting from working state W₂ for decoding the next line of not yet decoded macroblock 5a', 5b' using templates 6a', 6b'...and so on for successive lines of the frame, until all the macroblocks have been decoded.

This process may be repeated for the next current frame.

In the embodiment of Figure 3, for the respective macroblocks to be decoded, the destination device 3 sends a motion vector MV to the source device 2 and waits for the reception of residual data Res from the source device 2 before decoding the next macroblock. In other words, there is one synchronization point between the destination device 3 and the source device 2 for the successive macroblocks to be decoded. This may be an issue in delay- and error-prone networks. In contrast, in the embodiment of Figure 4, the destination device 3 sends motion vectors MV for a group of more than one macroblocks (a line of macroblocks in this example) to the source device 2 and waits the reception of residual data Res from the source device 2 before decoding the next group of macroblocks. Accordingly, there is less synchronization points between the destination device 3 and the source device 2.

In another embodiment, the current portion Pc is a current frame Fc, and successive working states W associated with the current frame Fc include the current frame at different scales or resolutions, for example octaves. The destination device 3 determines motion vectors at a first scale, using low resolution versions of the current frame and a corresponding working state of the previous frame, which include a low resolution version of the previous frame. The motion vectors are used by the source device 2 for reconstructing the current frame at the next scale level and determining the residuals at the next scale level. **Figure 5** shows successive working states W associated with the current frame Fc in this embodiment. This example use three scale levels: A low resolution version 7, a medium resolution version 8 and a full resolution version 9 of the current frame Fc. Other embodiments could use more scale levels.

We assume that the destination device 3 knows a working state of the previous frame Fp comprising versions of the previous frame Fp at low resolution, medium resolution and full resolution, respectively. This working state of the previous frame Fp may have been determined from an intra-coded first frame or when decoding the previous frame Fp as the current frame.

Initially, the destination device 3 receives the bootstrap B (step T1) which includes intra-coded data for the low resolution version 7 of the current frame Fc.

Then, the destination device 3 initialize the working state W₁ associated with the current frame Fc in function of the bootstrap B (Step T2). The working state W₁ includes the decoded low resolution version 7 of the current frame Fc, shown in grey on Figure 5. The medium resolution version 8 and the full resolution version 9 are not yet decoded in the working state W₁, and this is shown by empty macroblocks on Figure 5.

Then, the prediction module 32 of the destination device 3 determines motion vectors MV associated with the respective macroblocks of the low resolution version 7 of the current frame Fc (Step T3). For this, the destination device 3 matches the macroblocks of the low resolution version 7 of the current frame Fc with the corresponding low resolution version of the previous frame Fp. The destination device 3 sends the motion vectors MV to the source device 2 (Step T4).

Accordingly, the source device 2 receives the motion vectors MV which specifies respective macroblocks of the low resolution version 7 of the previous frame Fp associated with the macroblocks of the low resolution version 7 of the current frame Fc (Step S2). Then, reconstruction module 21 of the source device 2 determines a reconstruction RecFc of the current frame Fc at the medium resolution version 8, in function of the medium resolution version of the previous frame Fp and the received motion vectors MV determined for the low resolution version 7 (step S3). Then, the source device 2 determines residual data Res associated with the macroblocks of the medium resolution version 8, by comparing the medium resolution version 8 of the current frame Fc with its reconstruction RecFc (step S4).

Then, the source device 2 sends the determined residual data Res to the destination device 3 (step S5).

When it receives the residual data Res (step T5), the destination device 3 decodes the macroblocks of the medium resolution version 8 in function of the received residual data Res, the motion vectors MV and the medium resolution version of the previous frame Fp, and updates the working state W (step T6) associated with the current frame Fc to a working state W₂ including the decoded medium resolution version 8, now shown in grey on Figure 5.

This process is repeated starting from the working state W₂ for decoding the full resolution version 9 (or more intermediate resolution levels in embodiments using more scale levels).

This process may be repeated for the next current frame.

In the embodiment of Figure 5, the destination device 3 sends motion vectors MV for the macroblocks of a scale level L-1 to the source device 2 and waits the reception of residual data Res from the source device 2 before decoding the next scale level L. Accordingly, there is one synchronization point per scale level. This may limit the number of synchronization points between the destination device 3 and the source device 2.

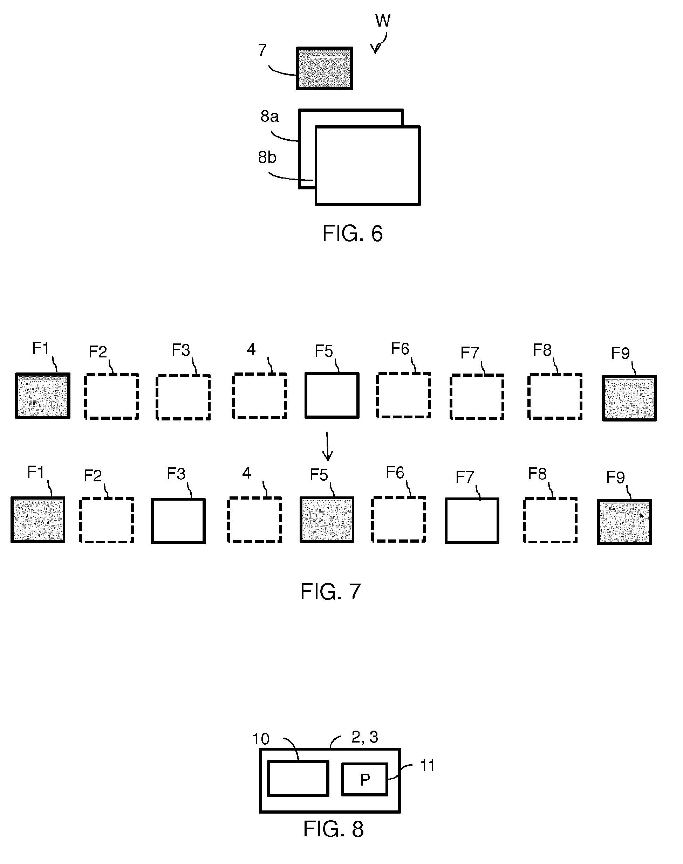

In another embodiment based on multiple scale level, the current portion Pc is a current frame Fc, and the prediction module 32 of the destination device 3 first determines a predicted version of the frame at a scale level L in function of the previous scale level L-1, using upscaling techniques such as super-resolution. Then, the prediction module 32 determines motion vectors for the scale level L by matching macroblocks of the predicted version of the frame at a scale level L with the scale level L of the previous frame. **Figure 6** shows a working state W associated with the current frame Fc in this embodiment, which comprise a low resolution version 7, a predicted medium resolution version 8a, a medium resolution version 8b and a full resolution version (not shown) of the current frame Fc.

Initially, the destination device 3 receives the bootstrap B (step T1) which includes intra-coded data for the low resolution version 7 of the current frame Fc.

Then, the destination device 3 initialize the working state W of the current frame Fc in function of the bootstrap B (Step T2). The working state W includes the decoded low resolution version 7 of the current frame Fc, shown in grey on Figure 6. The medium resolution version 8b and the full resolution version are not yet decoded in the working state W, and this is shown by empty macroblocks on Figure 6.

Then, the destination device 3 determines the predicted medium resolution version 8a of the current frame Fc in function of the low resolution version 7. The predicted medium resolution version 8a may be as simple as an upsampled version of the low resolution version 7, but also be determined by a more advanced superresolution technique or an extrapolation or interpolation of already available motion vectors.

The destination device 3 determines the motion vectors MV associated with the respective macroblocks of the medium resolution version 8b of the current frame Fc by matching the macroblocks of the predicted medium resolution version 8a of the current frame Fc with a corresponding medium resolution version of the previous frame Fp (Step T3). The destination device 3 sends the motion vectors MV to the source device 2 (Step T4).

Accordingly, the source device 2 receives the motion vectors MV (Step S2), determines residual data Res associated with the macroblocks of the medium resolution version 8b (S3, S4), and sends the determined residual data Res to the destination device 3 (step S5). The destination device 3 decodes the macroblocks of the medium resolution version 8b in function of the received residual data Res and updates the working state W (Step S6). This process is repeated for the full resolution version.

In the embodiment of Figure 6, since determining a predicted version and using it as input to the block matching algorithm already eliminated a great deal of redundant information, the residuals, now computed on the image differences, are expected to be smaller as well, requiring less bits to be sent by the source device 2.

In some embodiments, sending the motion vector(s) may comprise sending a message comprising data representative of vector difference(s) between the motion vectors of neighboring macroblocks. Also, in a multi-resolutions embodiment such as the embodiment of Figure 5, sending the motion vector(s) of one layer may comprise sending a message comprising data representative of vector difference(s) with the motion vectors of the lower-resolution level. This reduces the bandwidth used for transmission of the motion vectors.

Also, sending residual data Res may comprises transformation and quantization, similarly to transmission of residuals in encoding technique of the MPEG family.

In another embodiment, the current portion Pc is a group a frames and refinement is performed in the temporal direction. From two frames spaced apart in time, the destination device 3 determines motions vectors. Then, the destination device 3 determines the motion vectors for an intermediary frame in function of those motion vectors, for example by linear interpolation. The interpolated motion vectors are sent to the source device 2 or, alternatively, the motion vectors determined initially are sent to the source device 2 which performs the same interpolation. The source device 2 then determines and sends the residual for the intermediary frame to the destination device 3, which decodes the intermediary frame.

This process may be iterated starting from the first of the two initial frames and the intermediary frame, and from the second of the two initial frames and the intermediary frame. This is illustrated in **Figure 7** for an example of a current portion Pc which is a group of nine frames, numbered F1 to F9.

Initially, the destination device 3 receives a bootstrap B (step T1) which includes data for frames F1 and F9, for example intra-coded frames. Then, the destination device 3 initialize the working state W associated the current portion Pc. The working state W comprises the frames F2 to F8 as not yet decoded frames and the frames F1 and F9 as a decoded frame. This is shown in the first part of Figure 7 with frames F1 and F9 in grey, and empty frame F5. The other frames F2 to F4 and F6 to F8 are not considered initially and appear in dashed lines.

Then, the destination device 3 determines motion vectors MV_5 associated with the macroblock of the current frame F5. For this, the destination device 3 determines motion vectors MV_9 for the frame F9, by matching the macroblocks of the frame F9 with the frame F1. Then, the destination device 3 determines the motion vectors MV_5 in function of the motion vectors MV_9, for example by linear interpolation. The destination device 3 sends the motion vectors MV_5 to the source device 2. Alternatively, the destination device 3 sends the motion vectors MV_9 to the source device 2, which performs the same interpolation for determining the motion vectors MV_5.

Accordingly, the source device 2 obtains the motion vectors MV_5, which specifies macroblocks of the frame F1 associated with the macroblocks of the current frame F5. Then, the source device 2 determines a reconstruction RecFc of the frame F5 in function of the frame F1 and the motion vector MV_5 (step S3). Then, the source device 2 determines residual data Res for the frame F5, by comparing the frame F5 with its reconstruction RecFc (step S4).

Then, the source device 2 sends the determined residual data Res to the destination device 3 (step S5).

When it receives the residual data Res (step T5), the destination device 3 decodes the frame F5 in function of the received residual data Res, the motion vectors MV_5 and the frame F1. This is shown on the second line of Figure 6 where frame F5 appears in grey.

This process is repeated for decoding frame F3 from frames F1 and F5, and for decoding frame F7 from frames F5 and F9. Then, this process is repeated again for decoding frame F2 from frames F1 and F3, frame F4 from frames F3 and F5, frame F6 from frames F5 and F7, and frame F8 from frames F7 and F9.

Accordingly, the current portion Pc comprising the frames F1 to F9 is transmitted from the source device 2 to the destination device 3 without the need for the source device 2 to determine motion vectors by block matching or to transmit motion vectors. Moreover, synchronization points between the source device 2 and the destination device 3 are limited to one per frame.

In some embodiments, the spatial refinement approach of the embodiment of Figure 7 and the multi-resolution approach of the embodiments of Figures 5 and 6 are combined, resulting in block matching search in three dimensions.

In an embodiment, the prediction module 32 of the destination device 3 maintains a state transition model and an appearance model of objects in the scene of the video.

The appearance model comprises sampled renderings of those objects under varying conditions, e.g. viewpoint changes, illumination changes, face expressions, etc. The appearance model learns a low-dimensional manifold of physically feasible renderings in the full high-dimensional space of all appearances (i.e. pixel values). Typically, objects in a video follow a smooth temporal trajectory on this manifold. Such smooth trajectory may be predicted using simple low-order models and this prediction can be back-projected into the high-dimensional appearance space. The state transition model takes the current state, i.e. the belief of where the objects of the current frame reside on their respective low-dimensional manifolds, and the previous (or even further back in time) state and follows a dynamical model to progress to a predicted state for the next frame. Such a dynamical model may be a simple first order filter, like the Markov-assumption prediction model often used in Kalman trackers. This ensures that the objects follow smooth paths on their manifold. Building and maintaining the state model and the appearance model in function of the bootstrap B and successive decoded video frames is not described in detail here.

In this embodiment, after an initial phase wherein the destination device 3 receives intra-coded frames and builds the appearance model and state transition model, the prediction module 32 determines a predicted state associated with the current frame Fc according to the state transition model, in function of the current state and previous state(s).

Then, the prediction data PredD is determined according to the appearance model, in function of the predicted state. The prediction data PredD may include a prediction of the current frame Fc, which is then sent intra-coded to the source device 2. In that case, the reconstruction module 21 of the source device 2 simply needs to decode the reconstruction RecFc of the current frame Fc. In another embodiment, since it is often already a by-product of the appearance model, the prediction data PredD is determined by interpolating flow maps from the state difference between previous and predicted states. Flow maps indicate how the pixels of the previous frame should be mapped (often called warping or morphing) to approximate the new frame. The reconstruction module 21 of the source device 2 receives the flow map and applies it to determine the reconstruction RecFc of the current frame Fc. Such warping is a simple operation that doesn't require many resources. Moreover, since flow maps are smoother and may be better compressed than pixel values, this reduces the feedback channel bandwidth requirements.

These embodiments show that the use of motion vector(s) as prediction data PredD is only one option among others, which notably include intra-coded frames and flow maps.

**Figure 8** is a structural view of a communication device, which may be the source device 2 or the destination device 3. The communication device comprises a processor 10 and a memory 11. The memory 11 stores a computer program P which, when executed by the processor 10, cause the source device 2, respectively the destination device 3, to execute one of the methods described above with reference to Figures 2.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for transmission of a video (V) from a source device (2) to a destination device (3), executed by the source device (2), comprising encoding a current portion (Pc) of the video (V) by:
- receiving (S2), from the destination device (3), prediction data (PredD),
- determining (S3) a reconstruction (RecPc) of the current portion (Pc) in function of the received prediction data,
- determining (S4) residual data (Res) in function of the current portion and said reconstruction, and
- sending (S5), to the destination device (3), said residual data (Res).

2. Method according to claim 1, wherein the current portion is a macroblock (5) of a current frame encoded in function of a previous frame or a working state of the previous frame, and the prediction data comprise a motion vector (MV) specifying a macroblock of the previous frame associated with said macroblock (5) of the current frame.

3. Method according to claim 1, wherein the current portion is a group of macroblocks (5a, 5b) of a current frame encoded in function of a previous frame or a working state of the previous frame, and the prediction data comprise motion vectors (MVa, MVb) specifying respective macroblocks of the previous frame associated with said macroblocks (5a, 5b) of the current frame.

4. Method according to claim 1, wherein the current portion is a current frame (Fc) and said reconstruction is a reconstruction of the current frame at a first resolution, the method comprising:
- receiving (S2), from the destination device (3), additional prediction data (PredD),
- determining (S3) another reconstruction (RecFc) of the current frame at a second resolution higher than the first resolution, in function of the received additional prediction data,
- determining (S4) additional residual data (Res) in function of the current frame and said another reconstruction, and
- sending (S5), to the destination device (3), said additional residual data (Res).

5. Method according to claim 1, wherein the current portion is a group of frames, and the prediction data comprises motion vectors for one frame of said group of frame (F5) determined in function of other frames (F1, F9) of said group of frames.

6. Method according to claim 1, wherein the prediction data comprises a flow map or an intra-coded prediction of the current portion.

7. Source device (2) for transmission of a video (V) from the source device to a destination device (3), by encoding a current portion (Pc) of the video, comprising:
- means (10, 11) for receiving, from the destination device, prediction data (PredD),
- a reconstruction module (21) for determining a reconstruction (RecPc) of the current portion in function of the received prediction data,
- a comparison module (22) for determining residual data (Res) in function of the current portion and said reconstruction, and
- means (10, 11) for sending, to the destination device, said residual data.

8. Method for transmission of a video (V) from a source device (2) to a destination device (3), executed by the destination device, comprising decoding a current portion (Pc) of the video by:
- determining (T3) prediction data (PredD) in function of a working state (W) associated with the current portion,
- sending (T4) the prediction data to the source device, and then
- receiving (T5), from the source device, residual data (Res),
- determining (T6) an updated working state associated with the current portion in function of the received residual data.

9. Method according to claim 8, wherein the current portion is macroblock (5) of a current frame and the working state associated with the current portion comprises decoded macroblocks and not yet decoded macroblocks of the current frame, and determining prediction data comprises determining one motion vector (MV) specifying a macroblock of a previous frame associated with the macroblock (5) of the current frame, by matching a template (6) of decoded macroblocks of the working state located next to the not yet decoded macroblock with the previous frame or a corresponding working state of the previous frame.

10. Method according to claim 8, wherein the current portion is a group of macroblocks (5a, 5b) of a current frame and the working state associated with the current portion comprises decoded macroblocks and not yet decoded macroblocks of the current frame, and determining prediction data comprises determining motion vectors (MVa, MVb) specifying respective macroblocks of a previous frame associated with the macroblocks (5a, 5b) of the current frame, by matching templates (6a, 6b) of decoded macroblocks of the working state located next to the not yet decoded macroblocks with the previous frame or a corresponding working state of the previous frame.

11. Method according to claim 8, wherein the current portion is a current frame (Fc) and the working state of the current frame comprises a decoded version of the current frame in a first resolution (7) and a not yet decoded version of the current frame in a second resolution (8) higher than the first resolution, determining prediction data comprising determining motion vectors in function of the version of the current frame in the first resolution and a version of the previous frame in the first resolution.

12. Method according to claim 8, wherein the current portion is a current frame (Fc) and the working state of the current frame comprises a decoded version of the current frame in a first resolution (7) and a not yet decoded version of the current frame in a second resolution (8b) higher than the first resolution,
wherein determining prediction data comprises:
- determining a prediction version of the current frame in the second resolution (8a) in function of the version of the current frame in the first resolution, and
- determining a motion vectors in function of prediction version of the current frame in the second resolution and a version of the previous frame in the second resolution.

13. Method according to claim 8, wherein the current portion is a group of frames, and the method comprises determining motion vectors for one frame (F9) of the group of frame, wherein the prediction data comprises the motion vectors for said one frame or motion vectors for another frame (F5) of the group of frames determined in function of the motion vectors for said one frame (F9).

14. Method according to claim 8, wherein determining prediction data comprises:
- determining a predicted state of at least one object included in the current portion in function of a state model and a previous state,
- determining a prediction of the current portion or a flow map in function of the predicted state and an appearance model of the object.

15. Destination device (3) for transmission of a video (V) from a source device (2) to the destination device, by decoding a current portion of the video, comprising:
- a prediction module (32) for determining prediction data in function of a working state associated with the current portion,
- means for sending the prediction data to the source device, and then receiving, from the source device, residual data,
- an update module (31) for determining an updated working state associated with the current portion in function of the received residual data.
